# EUROPEAN PATENT SPECIFICATION

(11) **EP 4 196 425 B1**
(45) Date of publication and mention of the grant of the patent: **02.12.2026**
(21) Application number: 21749464.0
(22) Date of filing: 08.07.2021
(51) Int. Cl.: B66F 9/065, B66F 9/075, B62D 33/063, B62D 55/065, B62D 55/116, B62D 55/14, B66F 9/10

(54) **METHOD AND SYSTEM FOR PROVIDING AN IMPROVED ALL-TERRAIN TELEHANDLER**
VERFAHREN UND SYSTEM ZUR BEREITSTELLUNG EINES VERBESSERTEN GELÄNDE-TELEHANDLERS
PROCÉDÉ ET SYSTÈME DE FOURNITURE D'UN CHARIOT TÉLESCOPIQUE TOUT TERRAIN AMÉLIORÉ

(30) Priority: 18.09.2020 US 202017025428
(43) Date of publication of application: 21.06.2023
(73) Proprietor: Teletrax Equipment, LLC, Cedar Rapids IA 52401 (US)
(72) Inventor: OURADA, Tim, Cedar Rapids, IA 52401 (US)
(74) Representative: Jacob, Reuben Ellis
(86) International application number: PCT/US2021/040849
(87) International publication number: WO 2022/060456

(56) References cited:
- WO-A1-2019/177808
- US-A- 4 775 288
- US-A- 4 823 852
- US-B1- 11 091 358

## Description

### BACKGROUND

Heavy construction equipment, such as a telehandler, is frequently used on outdoor construction sites. Such heavy construction equipment may benefit from oscillating track systems in lieu of wheels/tires. Oscillating track systems may provide benefits to equipment operators over wheels such as improved traction, improved stability, and smoother rides over undulating terrain.

However, telehandlers usually require very stable structural supports since their telescoping booms may reach very tall heights while carrying heavy loads at the end of the boom. One problem with conventional telehandlers is that their front wheels are usually permitted to turn relative to a longitudinal axis of the telehandler. This turning of the front wheels for the conventional telehandler can substantially reduce the stability of telescoping booms, when the booms are extended and lifting heavy loads.

Another problem with conventional telehandlers is that they can be difficult for an operator to enter into the cab. If an operator has a leg injury and/or cannot climb certain heights, then the operator may not be able to enter the cab with ease.

Document WO 2019/177808 A1 discloses an all-terrain telehandler according to the preamble of the independent claim 1.

What is needed in the art is a telehandler that permits turning while increasing stability of the telehandler when a telescoping boom is extended and carrying heavy loads. Another need in the art exists for a telehandler which may increase the ease at which the cab may be entered by the operator.

### SUMMARY

According to the present invention, an all-terrain telehandler is provided as set out in claim 1.

Other aspects of the invention can be found in the dependent claims.

### BRIEF DESCRIPTION OF THE SEVERAL VIEWS OF THE DRAWINGS

FIGs. 1-28 and their corresponding descriptions can be found in WO2019/177808.
FIG. 29 is a cutaway, front-side view of an exemplary oscillating track system according to the solution, shown in a level position;
FIG. 30 is a cutaway, front-side view of the exemplary oscillating track system of FIG. 29, shown in a forward-tilt position;
FIG. 31 is a cutaway, front-side view of the exemplary oscillating track system of FIG. 29, shown in a backward-tilt position;
FIG. 32 is a close-up of the cutaway, front-side view of the exemplary oscillating track system of FIG. 29, illustrating various components of an oscillating track lock subsystem and gear drive;
FIG. 33 illustrates the oscillating track lock subsystem comprised within the illustrations of FIGs. 29-32;
FIG. 34 is a functional block diagram of an exemplary oscillating track lock subsystem according to the solution;
FIG. 35 illustrates a side perspective view of an all-terrain vehicle with articulating tracks according to an alternate exemplary embodiment;
FIG. 36 illustrates a bottom view of the all-terrain vehicle shown in FIG. 35;
FIG. 37 illustrates an exemplary front view of the all-terrain vehicle shown in FIG. 35 with front tracks in a contracted position;
FIG. 38A illustrates an exemplary front view of the all-terrain vehicle shown in FIG. 34 and FIG. 37 but with the front tracks in a fully extended position;
FIG. 38B illustrates an exemplary front view of the all-terrain vehicle shown in 38A but with an additional cut-away view of the bracket which contains hydraulic cylinders;
FIG. 39 illustrates an exemplary side perspective view of a front track and front bracket of the all-terrain vehicle shown in FIG. 35;
FIG. 40 illustrates a side view of the all-terrain vehicle of FIG. 35 but with its four boom sections in their fully extended position;
FIG. 41 illustrates a side, perspective view of the all-terrain vehicle of FIG. 40 in which all four boom sections are in a fully extended position while the front telescoping tracks are in a contracted position;
FIG. 42 illustrates a side, perspective view of the all-terrain vehicle of FIG. 40 in which all four boom sections are in a fully extended position while the front telescoping tracks are also in a fully extended position;
FIG. 43 illustrates a side, perspective view of the all-terrain vehicle of FIG. 40 in which all four boom sections are in a fully extended position while the front telescoping tracks are also in a fully extended position and while the fork assembly is in an elevated position relative to FIG. 42;
FIG. 44 illustrates a side perspective view of the superstructure for the all-terrain vehicle illustrated in FIGs 35-58;
FIG. 45 illustrates a front view of the superstructure shown in FIG. 44;
FIG. 46 illustrates a bottom view of the superstructure illustrated in FIG. 44;
FIG. 47 this figure illustrates the all-terrain vehicle of FIG. 35 moving forward, and fully articulated about its articulation point, and then starting to initiate a zero-turn in a counter-clockwise direction relative to drawing sheet as shown by a counter-clockwise directional arrow;
FIG. 48 illustrates the all-terrain vehicle of FIG. 47 continuing the zero-turn in a counter-clockwise direction relative to drawing sheet;
FIG. 49 illustrates the all-terrain vehicle of FIG. 48 continuing the zero-turn in a counter-clockwise direction relative to drawing sheet;
FIG. 50 illustrates the all-terrain vehicle of FIG. 49 continuing the zero-turn in a counter-clockwise direction relative to drawing sheet;
FIG. 51 illustrates the all-terrain vehicle of FIG. 50 continuing the zero-turn in a counter-clockwise direction relative to drawing sheet;
FIG. 52 illustrates a side view of the all-terrain vehicle with its cab initiating an operator loading sequence;
FIG. 53 illustrates a side view of the all-terrain vehicle with its cab continuing with an operator loading sequence relative to FIG. 52;
FIG. 54 illustrates a side view of the all-terrain vehicle with its cab continuing with an operator loading sequence relative to FIG. 53;
FIG. 55 illustrates a side view of the all-terrain vehicle with its cab continuing with an operator loading sequence relative to FIG. 54;
FIG. 56 illustrates a side view of the all-terrain vehicle with its cab continuing with an operator loading sequence relative to FIG. 55;
FIG. 57 illustrates a side view of the all-terrain vehicle with its cab continuing with an operator loading sequence relative to FIG. 56;
FIG. 58 illustrates a side view of the all-terrain vehicle with its cab continuing with an operator loading sequence relative to FIG. 57;
FIG. 59 illustrates a side view of the all-terrain vehicle with its cab in an elevated position and while the cab boom is in a contracted position; and
FIG. 60 illustrates a side view of the all-terrain vehicle with its cab in an elevated position and while the cab boom is in an extended position.

### DESCRIPTION

### Oscillating Track System with Oscillating Track Lock Subsystem

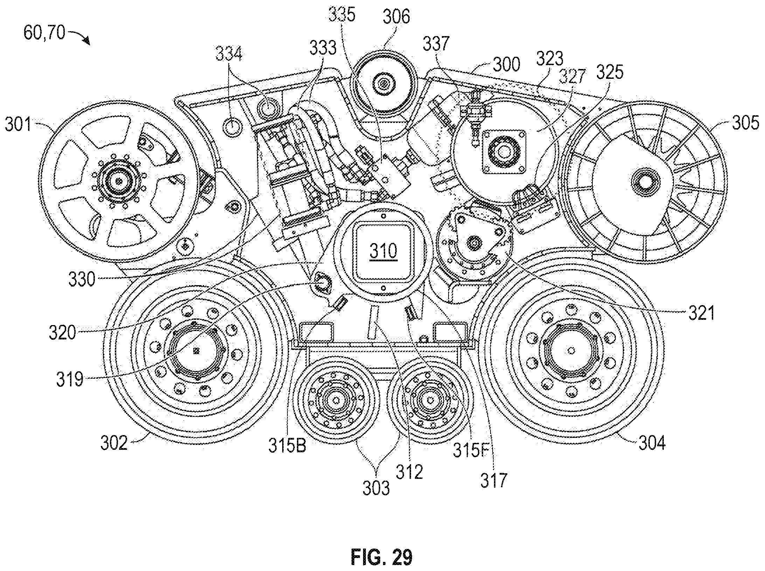

Turning now to FIGs. 29 - 34, details of an exemplary embodiment for an oscillating track system comprising an oscillating track lock subsystem solution are shown and described. As can be seen in the previous illustrations of FIGs. 1-28, the exemplary and novel telehandler comprises four oscillating track systems - two front oscillating track systems and two rear oscillating track systems. Each one or more of the oscillating track systems may further comprise an oscillating track lock subsystem, as will be shown and described in more detail below.

It is envisioned that embodiments of the novel telehandler may comprise less than four oscillating track systems such as, for example, two front oscillating track systems and two rear wheels, or vice versa. In this way, embodiments of the novel telehandler are not limited to comprising the use of four oscillating track systems. Moreover, it is envisioned that heavy equipment other than a telehandler may comprise oscillating track systems according to the solution in lieu of wheels or skids. For example, it is envisioned that heavy equipment such as, but not limited to, backhoes, crawler dozers, front end loaders, articulating loaders, excavators, skidsteers, feller bunchers, scissor lifts, boom lifts, etc. may benefit from incorporation of oscillating track systems according to the solution.

FIG. 29 is a cutaway, front-side view of an exemplary oscillating track system 60, 70 according to the solution, shown in a level position. The exemplary oscillating track system 60, 70 includes a housing 300 that defines an internal space as well as a general structure upon which various components of the system 60, 70 may be operationally mounted. Some components of the exemplary oscillating track system 60, 70 may be operationally mounted external to the housing 300 while other components may be operationally mounted within the internal space defined by the housing 300, as would be understood by one of ordinary skill in the art reviewing the figures and this disclosure. Notably, however, the particular oscillating track system 60, 70 illustrated in the figures is only exemplary in nature and, as such, it is envisioned that alternative embodiments of an oscillating track system 60, 70 may include different combinations of components operationally mounted externally versus internally to the housing 300 without departing from the scope of the solution.

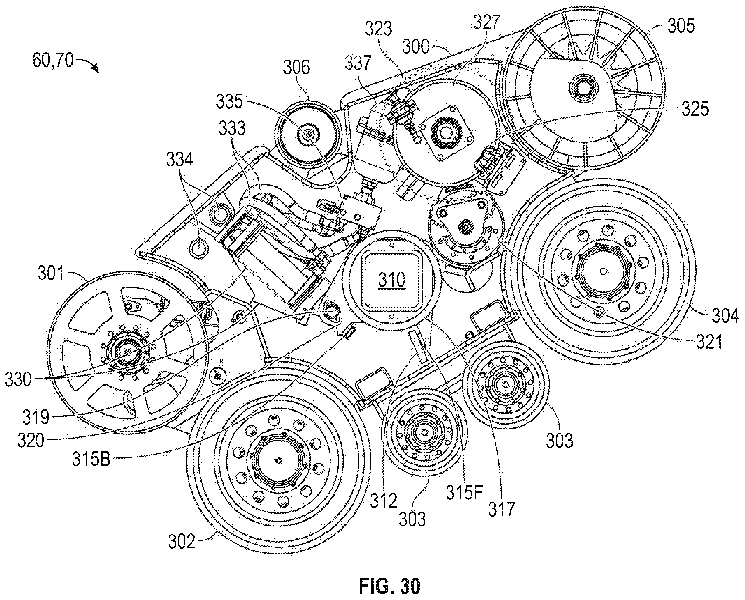

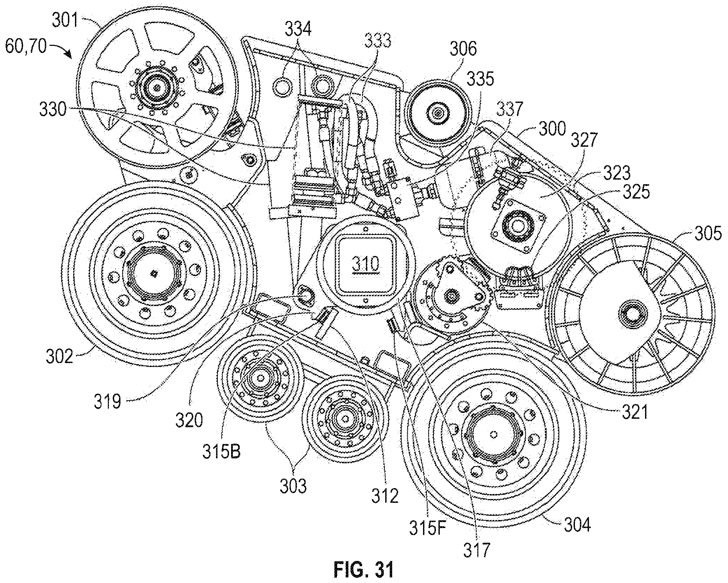

As can be seen in the FIG. 29 illustration (as well as the FIGs. 30 and 31 illustrations that follow), a series of wheels 301, 302, 303, 304, 305 and 306 are mounted external to the housing 300. A track (shown in the FIGs. 1-28 illustrations, but not shown in the FIGs. 29-31 illustrations) may be simultaneously engaged with the wheels 301, 302, 303, 304, 305 and 306 such that the track is operable to rotate around and along a path defined by the outermost edges of the circumferences of the various wheels 301, 302, 303, 304, 305 and 306. In the exemplary oscillating track system 60, 70, the track (again, not shown in the FIGs. 29-31 illustrations) is driven by wheel 305. An electric motor 321 equipped with a gear drive engages a spur gear 323. As would be understood by one of ordinary skill in the art of gears and sprockets, the spur gear 323 may be sized relative to the gear drive of electric motor 321 at a ratio that optimally leverages rotational speed in view of torque.

The spur gear 323 simultaneously engages wheel 305 which may be equipped with teeth configured to transfer torque to the track and, in doing so, provide a motive force to advance the track around the oscillating track system 60, 70. Additionally, the spur gear 323 may be mechanically associated with a braking disc 327 coupled with one or more brake calipers 325. As would be understood by one of ordinary skill in the art, the speed of rotation of spur gear 323 may be slowed via application of the brake calipers 325 to braking disc 327, thereby applying a frictional force to the braking disc 327 that, in turn, slows the speed of rotation of the spur gear 323. When the spur gear rotation speed slows, so slows the rotation of the track.

The brake calipers 325 may be actuated by an operator of the particular heavy equipment (e.g., a telehandler) that is driven by the oscillating track system 60, 70 according to any number of electromechanical and/or mechanical arrangements understood in the art of braking. Moreover, although the particular braking arrangement depicted in the exemplary oscillating track system 60, 70 is of a disc/caliper type, it is envisioned that other braking arrangements may be leveraged by embodiments of the solution including, but not limited to, drum brakes, magnetic brakes, etc.

Moreover, in some embodiments of the solution, the primary braking force is associated with electric motor 321. An operator may cause the speed of rotation for the track to be decreased (or increased) by modifying or changing the rate of rotation of the shaft of motor 321. The rate of rotation of the electric motor 321 may be varied by varying the electrical power supplied to the motor 321, as would be understood by one of ordinary skill in the art of electric motors. In this way, when the electric motor 321 is powered down or up, the speed of rotation of spur gear 323 may be likewise decreased or increased. In such embodiments, the brake calipers 325 and disc 327 may function primarily as a parking brake.

Notably, although the exemplary embodiment of an oscillating track system 60, 70 shown in the figures includes an electric motor 321 equipped with a gear drive that drives a spur gear 323 that, in turn, drives a toothed wheel 305 that, in turn, provides a motive force to a track, other similar as well as not-so-similar arrangements are envisioned and will occur to those skilled in the art and, as such, embodiments of the solution for an oscillating track system will not be limited to the specific gear arrangement shown in the figures and described herein.

For example, the gear 323 and gear drive of motor 321 may, in other drivetrain arrangements, take the form of helical gears instead of the straight-toothed spur gears illustrated in the figures. As a further example, it is envisioned that any drivetrain arrangement including any combination in number and type of gears may be leveraged as deemed optimal by one of ordinary skill in the art of drivetrains for a given application and may, therefore, include any combination of spur gears, bevel gears, worm gears, planetary gears, internal/external gear combinations, etc. without departing from the scope of the solution.

Additionally, although the exemplary embodiment of an oscillating track system 60, 70 illustrated in the figures includes an electric motor 321, it is envisioned that other motor types may be leveraged in lieu of, or in addition to, an electric motor such as, but not limited to, a hydraulic motor and pump arrangement. As such, it will be understood that embodiments of the solution for an oscillating track system will not be limited to include an electric motor in the drivetrain.

The housing 300, and therefore by extension the entire oscillating track system 60, 70, is rotatably mounted around square axle 310 such that it can oscillate from a forward-tilt position to a backward-tilt position. In the FIG. 29 illustration, the exemplary oscillating track system 60, 70 is in a substantially level position relative to a plane defined by the bottom surface of square axle 310. The housing is rotatably mounted around square axle 310 via housing/axle coupling 317. Housing/axle coupling 317 may comprise bearings, grease fittings, or the like in order to deter mechanical wear as the housing/axle coupling 317 rotatably translates around axle 310.

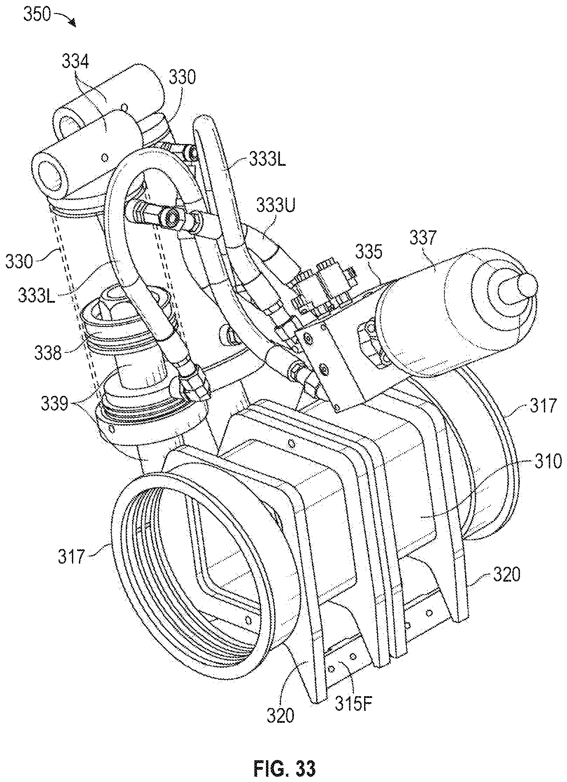

Advantageously, the exemplary oscillating track system 60, 70 includes an oscillating track lock subsystem 350 comprising an arrangement of one or more linear stroke cylinders 330, hydraulic hoses 333, one or more accumulators 337 and an isolation valve 335 (isolated in FIG. 33 illustration). The cylinders 330 are mechanically attached to the housing 300 at anchor points 334 and to the axle sleeve 320 at anchor point 319.

Notably, although the exemplary embodiment of an oscillating track lock subsystem shown in the figures comprises a pair of linear stroke cylinders 330, it is envisioned that alternative embodiments may leverage a single linear stroke cylinder or multiple cylinders and, as such, the scope of the solution is not limited to use of a pair of linear stroke cylinders 330. Advantageously, the exemplary embodiment of an oscillating track lock subsystem 350 shown in the figures leverages a pair of relatively smaller linear stroke cylinders 330 in lieu of a single, relatively larger cylinder and, in doing so, may be accommodated within the limited internal space defined by housing 300.

Returning to the FIG. 29 illustration, it can be seen that the linear stoke cylinders 330 each comprise a piston 338 and rod 339 (see FIG. 33 for more detail) with the piston 338 positioned substantially at a mid-stroke within its barrel. Correspondingly, the oscillating track system 60, 70 is in a relatively level position as described above. With the oscillating track system 60, 70 in a relatively level position, both a forward-tilt limit stop 315F and a backward-tilt limit stop 315B are substantially equidistant from a stop block aspect 312. The stop block aspect 312 is fixedly mounted internal to the housing 300.

As will be shown in more detail below relative to the FIG. 33 illustration, the oscillating track lock subsystem 350 freely accommodates an oscillating, up and down, movement of the oscillating track system 60, 70 as it follows undulating terrain. As one of ordinary skill in the art would recognize, as an oscillating track system 60, 70 is in operation and traversing uneven ground, the track system 60, 70 may follow the contours of the ground, thereby forward-tilting as the ground beneath the system 60, 70 declines and backward-tilting as the ground beneath inclines (see FIGs. 21-22). This oscillating movement of the track system 60, 70 works to rotatably move the track system 60, 70 about the axle 310 via housing/axle coupling 317, as previously described. Correspondingly, the piston(s) 338 translate linearly up and down, with the piston(s) 338 retracting rod(s) 339 within the barrel(s) as the track system 60, 70 moves toward a more forward-tilted position and extending rod(s) 339 from the barrel(s) as the track system 60, 70 moves toward a more backward-tilt position.

As the track system 60, 70 oscillates, and the piston(s) 338 correspondingly translate their positions linearly, hydraulic fluid flows in and out of the barrels of the linear stroke cylinders 330 in accordance with the movement of the piston(s) 338. The hydraulic fluid accordingly passes back and forth through valve 335 and, in concert, in and out of accumulator 337. Advantageously, an operator of heavy equipment that leverages an oscillating track system 60, 70 having an oscillating track lock subsystem 350 may cause the valve 335 to actuate to a closed position, thereby stopping the flow of hydraulic fluid through the subsystem 350 and effectively locking the oscillating track system 60, 70 in whatever position it may have taken.

In this way, the oscillating track lock subsystem 350 may prevent the entire oscillating track system 60, 70 from oscillating, as any rotational movement of the system 60, 70 relative to the axle 310 is prevented when hydraulic fluid is unable to flow in and out of the cylinders 330. Subsequently, the operator may actuate valve 335 to an open flow state, thereby allowing for hydraulic fluid flow through the oscillating track lock subsystem 350 to resume and, in turn, allow for the oscillating track system 60, 70 to oscillate about axle 310.

Notably, the exemplary embodiment of an oscillating track lock subsystem 350 shown in the figures is of a hydraulic arrangement and, advantageously, does not necessarily include a hydraulic pump - the motive force for the fluid flow is provided by the oscillating movement of the oscillating track system 60, 70 as it traverses uneven terrain. Even so, embodiments of the solution for an oscillating track lock subsystem do not necessarily preclude the use of hydraulic pump(s) to assist in hydraulic fluid circulation during normal operation or to provide an alternative motive force that may be leveraged to adjust the rotational position of the track system 60, 70 relative to the axle 310.

Additionally, although the exemplary embodiment of an oscillating track lock subsystem 350 illustrated in the figures is of a hydraulic arrangement, the scope of the solution is not so limited as it is envisioned that alternative embodiments may leverage pneumatic and/or electromechanical arrangements. For example, it is envisioned that an oscillating track lock subsystem may utilize electromagnets in lieu of valve 335 to prevent free movement of a mechanical linkage, thereby locking the subsystem in a position, or utilize a compressor and releasable air brake arrangement to prevent free oscillation.

Moreover, the valve 335 in the exemplary embodiment of an oscillating track lock subsystem 350 illustrated in the figures is of a solenoid type, however, the scope of the solution is not so limited as it is envisioned that alternative embodiments of valve 335 may be in the form of an electrically or pneumatically or hydraulically actuated ball valve or some other quarter-turn valve type. Further, valve 335 may be of a linearly actuated type, whether actuated with an electric actuator, pneumatic actuator or hydraulic actuator such as, but not limited to, a gate valve, a needle valve, or a pinch valve.

With regards to the accumulator 337, it is envisioned that the accumulator may preferably be of a bladder type, although it is envisioned that embodiments of the solution may instead leverage a piston-styled accumulator or other accumulator design particularly suited for a given application. As one of ordinary skill in the art of accumulators understands, a compressible gas may be contained within the accumulator tank such that it is on the "outside" of a bladder, for example, that is also within the accumulator tank. As hydraulic fluid, for example, is forced into the bladder the bladder expands and the compressible gas compresses to accommodate a reduced volume. The compressed gas provides a motive force to urge the hydraulic fluid out of the bladder when needed elsewhere in the system such as, for example, within linear cylinders 330 of the exemplary oscillating track lock subsystem. As one of ordinary skill in the art of accumulators would recognize, a piston-styled accumulator may leverage a compressible gas on the topside of a piston within a barrel, thereby facilitating flow of a hydraulic fluid (or some other fluid) in and out of the accumulator within a volume defined within the barrel beneath the piston.

Turning now to FIG. 30, illustrated is a cutaway, front-side view of the exemplary oscillating track system 60, 70 of FIG. 29, shown in a forward-tilt position. Referring to the description above regarding the oscillation of the oscillating track system 60, 70, it can be understood from the FIG. 30 illustration that the track system 60, 70 has oscillated to a forward-tilted position in response to a declining terrain. The oscillating track lock subsystem 350 may remain in an unlocked state with the valve 335 allowing for hydraulic fluid flow through the subsystem 350.

The piston(s) 338 have taken fully retracted positions into their respective barrels and, in doing so, operate to contract the distance between the housing anchor points 334 to the axle sleeve anchor points 319. To ensure that the piston(s) 338 are not stroked beyond their limits, forward-tilt limit stop 315F can be seen engaged to stop block aspect 312. Advantageously, actuation of valve 335 such that hydraulic fluid flow through oscillation track lock subsystem 350 is prevented will secure or "lock" the position of the oscillating track system and prevent oscillation away from the forward-tilted position.

FIG. 31 is a cutaway, front-side view of the exemplary oscillating track system 60, 70 of FIG. 29, shown in a backward-tilt position. Referring to the description above regarding the oscillation of the oscillating track system 60, 70, it can be understood from the FIG. 31 illustration that the track system 60, 70 has oscillated to a backward-tilted position in response to an inclined terrain. The oscillating track lock subsystem 350 may remain in an unlocked state with the valve 335 allowing for hydraulic fluid flow through the subsystem 350. The piston(s) 338 have taken fully extended positions toward the bottoms of their respective barrels and, in doing so, extend the rods 339 from the barrels to fully extend the distance between the housing anchor points 334 to the axle sleeve anchor points 319. To ensure that the piston(s) 338 are not stroked beyond their limits, backward-tilt limit stop 315B can be seen engaged to stop block aspect 312. Advantageously, actuation of valve 335 such that hydraulic fluid flow through oscillation track lock subsystem 350 is prevented will secure or "lock" the position of the oscillating track system and prevent oscillation away from the backward-tilted position.

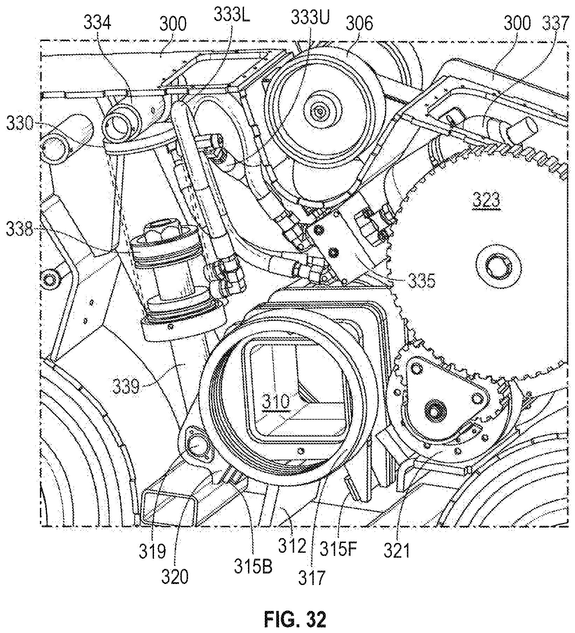

FIG. 32 is a close-up of the cutaway, front-side view of the exemplary oscillating track system 60, 70 of FIG. 29, illustrating various components of an oscillating track lock subsystem 350 and gear drive. As can be better seen in the FIG. 32 illustration, the piston 338 is in a mid-stroke ranged position within its barrel such that the rod 339 is partially extended. As such, the distance between the housing anchor points 334 are at a mid-range distance from the axle sleeve anchor points 319. The axle sleeve 320 is mechanically fixed to the square axle 310 and does not rotate around axle 310. Consequently, extension or retraction of the rod 339 operates to modulate the distance between connection points 334 and 319 such that the housing 300 of the entire oscillating track system is rotated, or oscillated, about the axle 310.

During such modulation, hydraulic fluid flows in and out of a lower volume beneath piston 338 via hoses 333L and, similarly, flows in and out of an upper volume above piston 338 via hoses 333U. As described above, the hydraulic fluid transfers from the upper and lower volumes in the cylinders 330 via the valve 335 and accumulator 337. Open flow paths through valve 335 allow for oscillation of the oscillating track system 60, 70 while closed flow paths through valve 335 work to prevent oscillation of the system 60, 70.

FIG. 33 illustrates the oscillating track lock subsystem 350 comprised within the illustrations of FIGs. 29-32. Anchor points 334 fix the linear cylinders 330 to the housing 300 (not shown in FIG. 33). Hydraulic fluid flow through hoses 333 allow hydraulic fluid to pass through valve 335, with excess hydraulic fluid volume being accommodated by accumulator 337. As can be seen in the FIG. 33 illustration, the piston 338 is in a substantially mid-range position within its barrel such as that which was illustrated and described above relative to FIG. 29. The axle sleeve 320 is rigidly attached to the axle 310 and provides for connection points 319 as previously described (not seen in FIG. 33). Axle sleeve 320 also provides for limit stops 315. Housing/axle coupling 317 enables the housing 300 (not shown in FIG. 33) to rotate or oscillate about the axle 310 as the oscillation track lock subsystem 350 modulates.

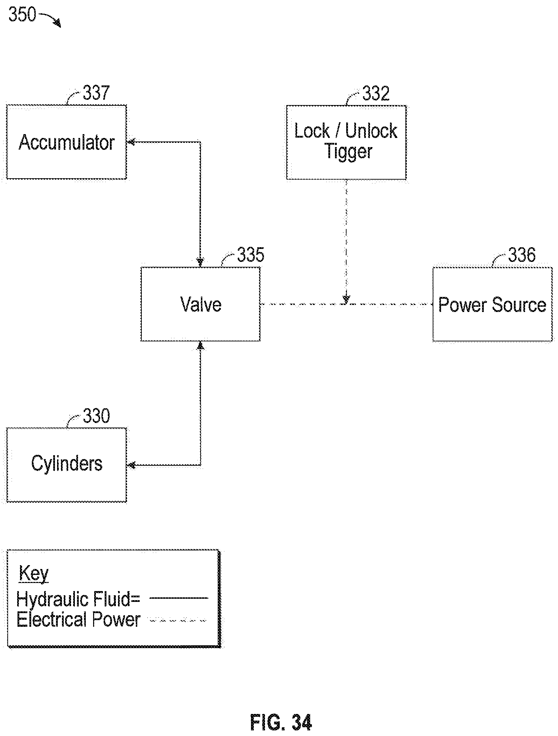

FIG. 34 is a functional block diagram of an exemplary oscillating track lock subsystem 350 according to the solution. A power source 336, such as a 24VDC or 120Vac power source, may be in electrical communication with valve 335. As previously described, valve 335 may be a solenoid driven valve and, as such, application or removal of a power supply to the valve 335 may cause it to transition between open and closed states. The valve 335 may be a "normally open" valve in which the fluid flow through the valve body is open when power supply is removed from the solenoid.

Similarly, the valve 335 may be a "normally closed" valve in which the fluid flow through the valve body is closed when power supply is removed from the solenoid. An operator of the oscillating track lock subsystem may "make or break" the power supply circuit from the power source 336 to the valve 335 using a lock / unlock trigger 332. Simply stated, the lock / unlock trigger 332 may be a mechanical button or touchscreen radio button accessible by a user. Other forms of a lock / unlock trigger 332 are envisioned and will occur to those of skill in the art.

Actuating the lock / unlock trigger 332 may cause the valve to switch between states of open flow and closed flow. The valve 332, when in an open flow state, allows a hydraulic fluid to freely pass from the accumulator 337 to the upper and lower volumes defined within the cylinders 330, as previously shown and described. Similarly, the valve 332, when in a closed flow state, prevents flow of hydraulic fluid within the subsystem 350 and, in doing so, prevents the oscillating track system 60, 70 from oscillating, as previously shown and described.

### FRONT TRACKS MAINTAINED AT PREDETERMINED ANGLE RELATIVE TO SUPERSTRUCTURE

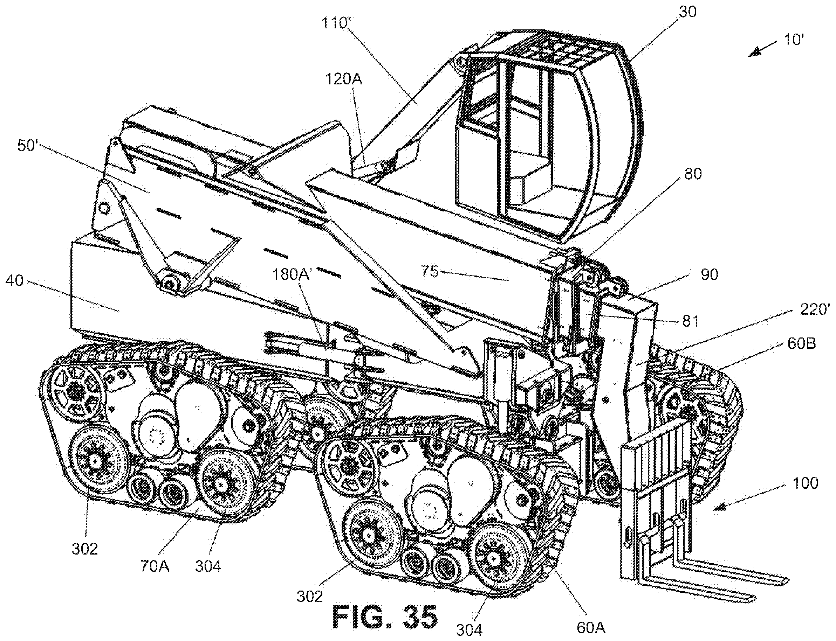

Referring now to FIG. 35, this figure illustrates a side perspective view of an all-terrain vehicle 10' with articulating tracks 60, 70 according to an alternate exemplary embodiment. FIG. 35 generally corresponds to the prior exemplary embodiments disclosed above and illustrated in FIGs. 1-34. Only the differences between the FIG. 35 and subsequent FIGs. 35-60 will be described below.

In FIG. 35, the front telescoping tracks 60A, 60B are shown to be in their fully extended or fully telescoped postion relative to the superstructure 50'. Both of the front tracks 60A, 60B and both of the rear tracks 70A, 70B have wheels 302, 304 which were described previously in connection with the exemplary embodiment illustrated in FIG. 29. That is, the front tracks 60A, 60B and rear tracks 70A, 70B are the same as described in connection with the exemplary oscillating track system shown and described above in connection with FIG. 29.

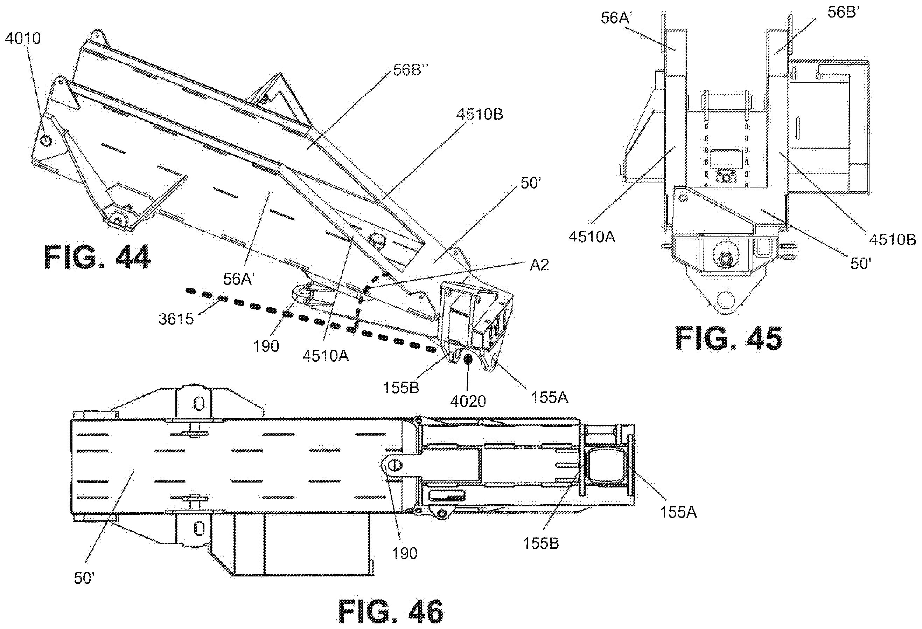

According to this exemplary embodiment shown in FIG. 35, the superstructure 50' has a unique shape/geometry compared to the superstructure 50 described above in connection with FIGs. 1-28 described above. Further details of superstructure 50' will be described below in connection with FIGs. 44-46.

According to this exemplary embodiment of FIG. 35, the large boom section 75 houses three other boom sections 80, 81, and 90, compared to only two boom sections 80, 90 shown in FIGs. 1-14. That is, the large boom section 75 coupled to the superstructure 50' has three telescoping boom sections 80, 81, and 90. Meanwhile, the large boom section 75 in FIGs. 1-14 houses only two boom sections 80, 90.

Further, the fork bracket 220' of FIG. 35 is a little different compared to the fork bracket 220 shown in FIG. 1. For example, the fork bracket 220' of FIG. 35 has a length which is a little longer compared to the bracket 220 shown in FIG. 1.

The front superstructure 50' may be articulated relative to the rear body/engine compartment 40 by an articulation point.

Another difference illustrated in FIG. 35 is the cab boom section 110'. Meanwhile, FIG. 1 shows a cab linkage 110 which has two beam like structures which articulate the cab 30 shown in FIG. 1.

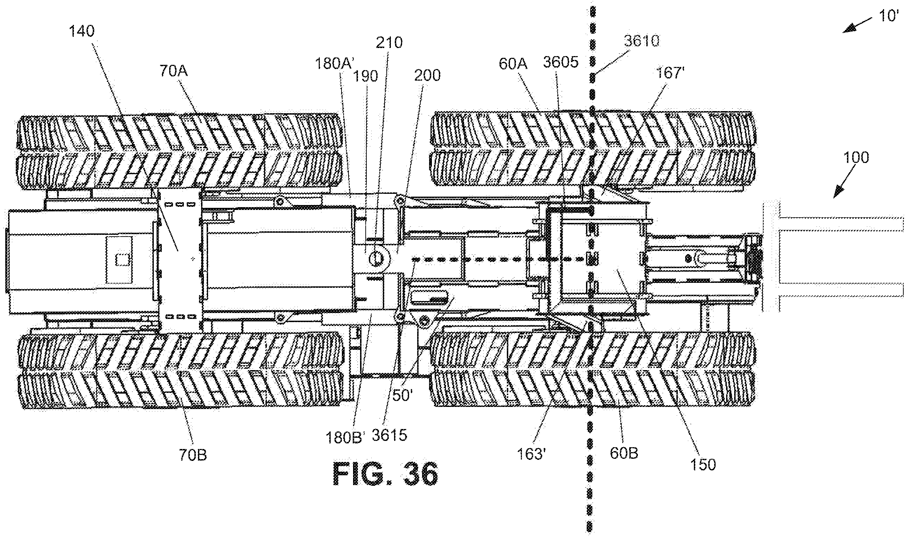

Referring now to FIG. 36, this figure illustrates a bottom view of the all-terrain vehicle 10' shown in FIG. 35. According to this exemplary embodiment, the front telescoping tracks 60A, 60B have been contracted to their most reduced or contracted position relative to the front superstructure 50'.

One inventive aspect of the all-terrain vehicle 10' is that the right telescoping axle 163' and the left telescoping axle 167' keep or maintain the two front tracks 60A, 60B at a predetermined angle relative to a longitudinal axis 3615 of the front superstructure 50'. Specifically, that predetermined angle is right angle or ninety degrees shown with label 3605. In other words, the telescoping axles 163', 167' as well as the front bracket 150 keep the front two telescoping tracks 60A, 60B at a ninety-degree angle 3605 relative to the longitudinal axis 3615 of the front superstructure 50'.

The telescoping axles 163', 167' and front bracket 150 define a driving axis 3610 which is at a ninety degree angle 3605 relative to the longitudinal axis 3615 of the front superstructure 50'. This fixed ninety degree angle 3605 of the tracks 60A, 60B keeps the front superstructure 50' very stable when the large boom section 75 and corresponding smaller, telescoping boom sections 80, 81, and 90 start extending, such as while lifting heavy loads with the front fork assembly 100.

According to the exemplary embodiment illustrated in FIG. 36, the telescoping axles 163', 167' may be formed by angled beams compared to the exemplary, straight/straight-line telescoping axles 163, 167 shown in FIG. 29. While the telescoping axles 163', 167' may comprise beams at an angle relative to the longitudinal axis 3615 of the front superstructure 50', these angled beams 163', 167' function identically to those axles 163, 167 of FIG. 29. That is, the angled beams forming axles 163', 167' still keep the front telescoping trax 60A, 60B at the fixed, ninety-degree angle 3605 relative to the longitudinal axis 3615 of the front superstructure 50'.

Also illustrated in FIG. 36 are hinge brackets 190, 200. Hinge bracket 200 is coupled to the front superstructure 10' while the hinge bracket 190 is coupled to the rear body/engine compartment 40. The hinge brackets 190, 200 may be coupled together by a hinge bracket pin 210.

The hinge bracket pin 210 may also be referred to as an articulation point. This articulation point 210 facilitates steering of the vehicle 10' in conjunction with the hydraulic cylinders 180A, 180B which apply forces to cause the superstructure 10' and rear body 40 to move relative to each other based on the articulation point 210.

It is noted that hydraulic cylinders are referenced throughout this detailed description as the main actuators for creating forces/movements between parts. However, each actuator may comprise other types of systems instead of hydraulic systems. For example, each actuator may comprise a pneumatic system, a servo-motor system, gear(s)/belt-drive(s), and electrical types of moving systems, or a combination thereof. As another non-limiting example, certain embodiments of the solution may employ a motor-screw-type/electromechanical actuators instead of hydraulic ones shown. Thus, other actuator types are possible for the illustrated embodiments and are within the scope of this disclosure as understood by one of ordinary skill in the art.

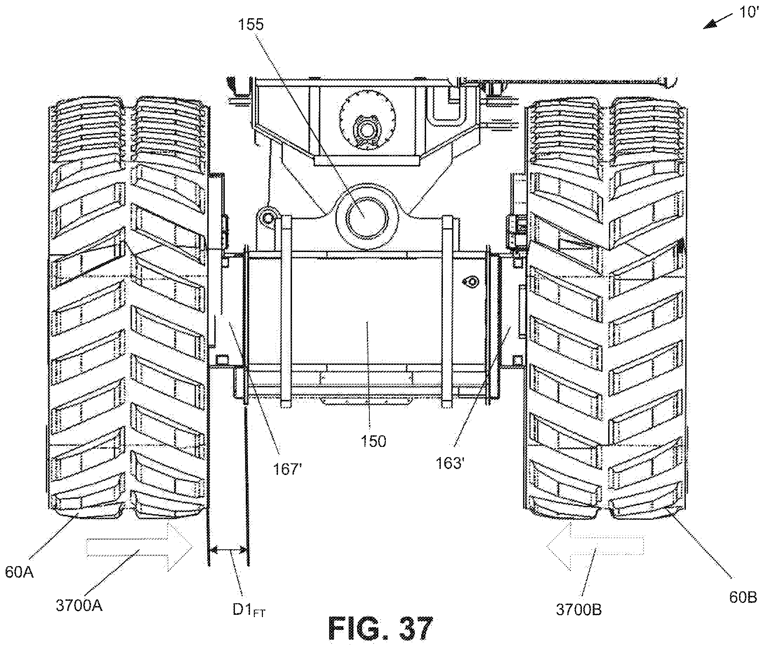

Referring now to FIG. 37, this figure illustrates an exemplary front view of the all-terrain vehicle 10' shown in FIG. 34 with the front tracks 60A, 60B in a contracted position. Specifically, in this front view of FIG. 37, the front telescoping tracks 60A, 60B are shown to be in their fully contracted position as indicated by directional arrows 3700A, 3700B. That is, the telescoping axles 163', 167' are fully contracted within the bracket 150.

In the contracted position shown in FIG. 37, the telescoping axles 163', 167' keep the front tracks 60A, 60B at a first distance D1_{FT} from the front bracket 150 of about, or substantially 6.0 inches. Other magnitudes smaller or greater for the first distance D1_{FT} are possible and are within the scope of this disclosure.

Also illustrated in FIG. 37 is a bracket hinge pin 155. Bracket hinge pin 155 functions in the same way as described above in connection with FIGs. 19-20. The bracket hinge pin 155 allows tracks 60A, 60B to oscillate around the longitudinal axis 3615 (FIG. 36), as shown in FIGs. 19-20. Meanwhile, the bracket 150 with the telescoping axles 163', 167' still maintain the tracks 60A, 60B at a ninety-degree angle relative to the longitudinal axis 3615 as shown in FIG. 36.

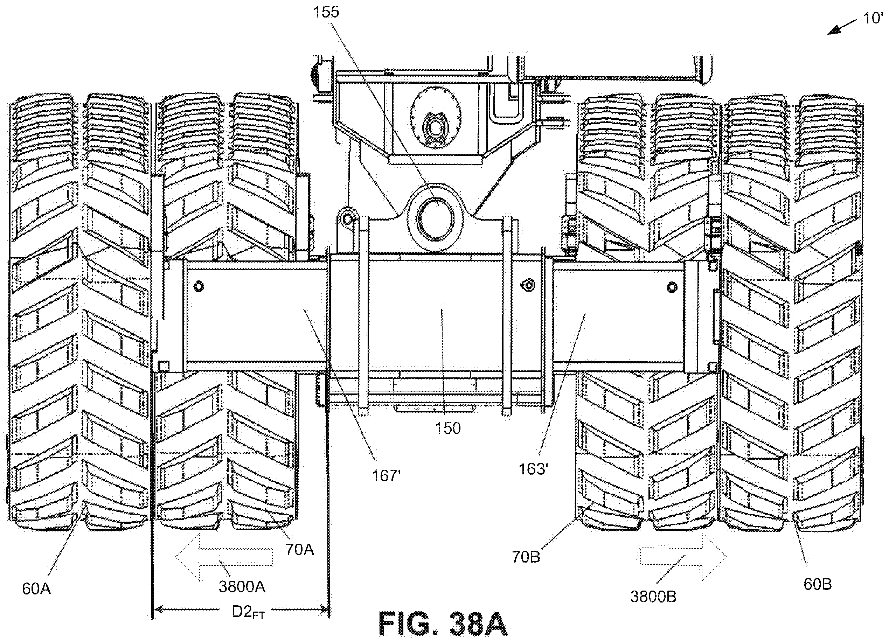

Referring now to FIG. 38A, this figure illustrates an exemplary front view of the all-terrain vehicle 10' shown in FIG. 34 and FIG. 37 but with the front tracks 60A, 60B in a fully extended position. Specifically, in this front view of FIG. 38A, the front telescoping tracks 60A, 60B are shown to be in their fully extended position as indicated by directional arrows 3800A, 3800B. That is, the telescoping axles 163', 167' are fully extended relative to the bracket 150.

In the extended position shown in FIG. 38A, the telescoping axles 163', 167' keep the front tracks 60A, 60B at a second distance D2_{FT} from the front bracket 150 of about, or substantially 30.0 inches. Other magnitudes smaller or greater for this second distance D2_{FT} are possible and are within the scope of this disclosure.

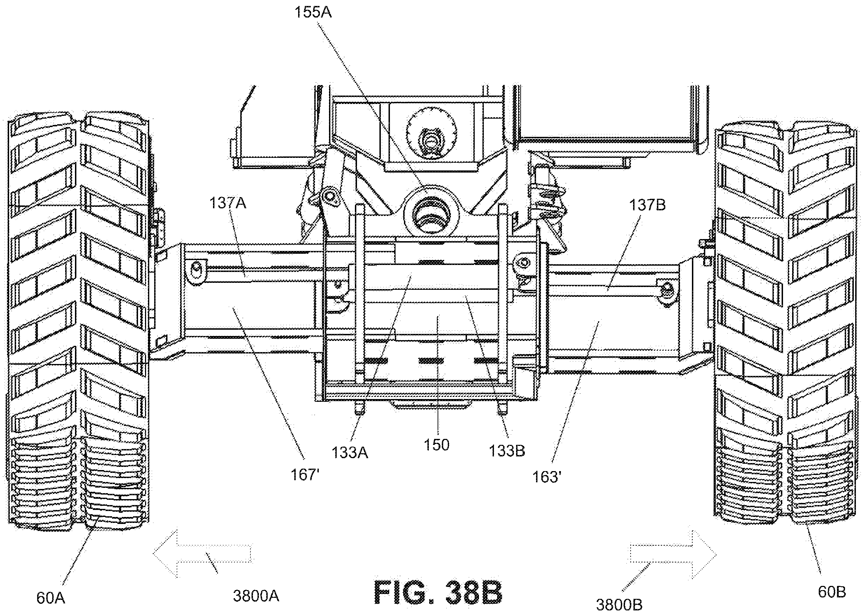

Also illustrated in FIG. 38A are rear tracks 70A, 70B. Rear tracks 70A, 70B are now visible in FIG. 38 because the front tracks 60A, 60B have been extended away from the bracket 150 in their fully extended position. The rear tracks 70A, 70B remain at a fixed distance relative to the longitudinal axis 3615 of the superstructure 50' (the longitudinal axis 3615 is also defined by/corresponds with the hinge pin 155). Usually, the fixed distance for the rear tracks 70A, 70B is equal to the first distance D1FT described above in connection with FIG. 37 for the front tracks 60A, 60B.

Referring now to FIG. 38B, this figure illustrates an exemplary front view of the all-terrain vehicle 10' shown in 38A but with an additional cut-away view of the bracket 150 which contains hydraulic cylinders 133A, 133B. The hydraulic cylinders 133A, 133B have pistons 137A, 137B which extend from the cylinders 133A, 133B, which in turn, move the arms 163', 167' to extend and/or contract the front tracks 60A, 60B. Also, in this FIG. 38B, the rear tracks 70A, 70B have been removed to provide a less crowded view of the internal structures shown.

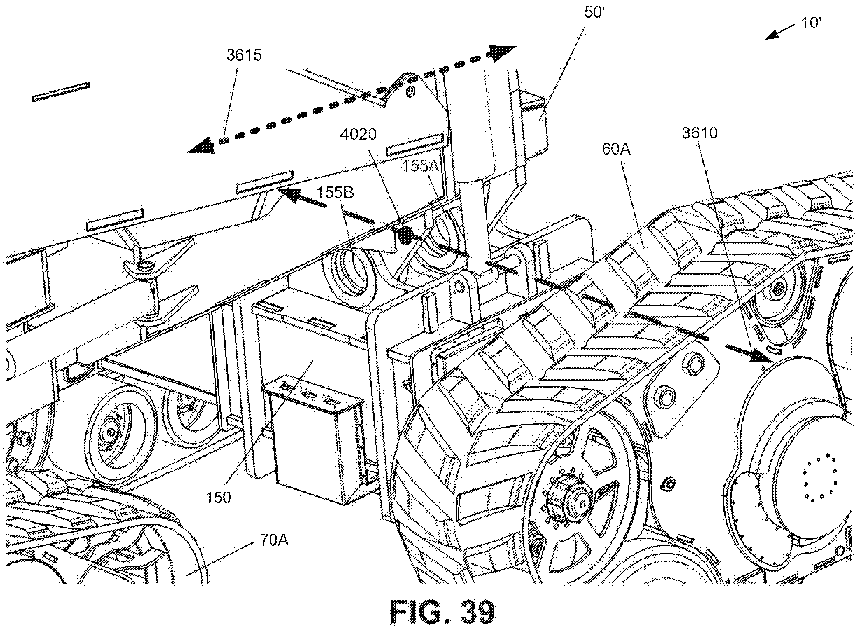

Referring now to FIG. 39, this figure illustrates an exemplary side perspective view of the front right track 60A and front bracket 150 of the all-terrain vehicle 10' shown in FIG. 35. Also visible in this view are two hinge brackets 155A, 155B that provide pivotable support for the bracket 150 as described previously.

A geometrical longitudinal axis 3615 for the superstructure 50' is also shown in FIG. 39. While this axis 3615 is shown above/within superstructure 50', the axis 3615 may also be defined by the two hinge brackets 155A, 155B as understood by one of ordinary skill in the art. That is, a geometrical center of each hinge bracket 155A, 155B may define a point and the two points of the two hinge brackets 155A, 155B may define the line for the longitudinal axis 3615 when viewing the front superstructure 50' from above.

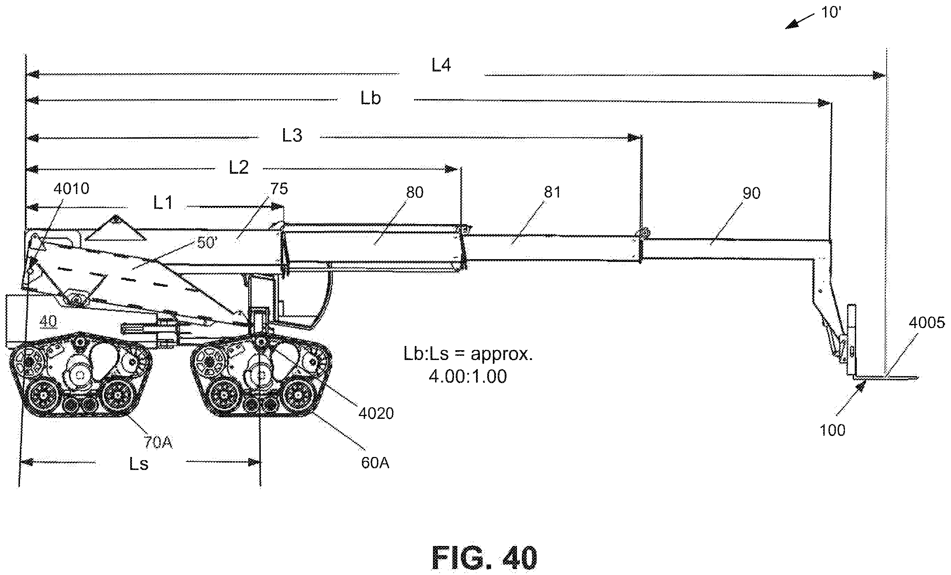

The geometrical longitudinal drive axis 3610 for the front tracks 60 is also shown in FIG. 39. As noted previously, this axis 3610 is at a ninety-degree angle relative to axis 3615. Also illustrated in FIG. 39 is front axle connection point 4020. This connection point 4020 is referenced in FIG. 40 and is used for calculating a superstructure length (Ls) described below.

### PREDETERMINED RATIO FOR BOOM LENGTH TO SUPERSTRUCTURE LENGTH (PORTION)

Referring now to FIG. 40, this figure illustrates a side view of the all-terrain vehicle 10' shown in FIG. 35 but with its four boom sections 75, 80, 81, and 90 in their fully extended position. The length (Lb) of the entire boom having its four boom sections 75, 80, 81, and 90 may comprise a magnitude of about, or substantially 57.20 feet.

This total boom length (Lb) is measured from the boom hinge pin/point 4010 to an end section of the smallest boom section 90. Other magnitudes, greater or smaller, for this total boom length (Lb) are possible and are within the scope of this disclosure.

Meanwhile, the length (Ls) of the supporting superstructure 50' is measured from a front axle connection point 4020 for the front tracks 60A to the boom hinge point 4010 as illustrated in FIG. 40. The magnitude of the superstructure length (Ls) is about 14.60 feet. Other magnitudes, greater or smaller, for this superstructure length (Ls) are possible and are within the scope of this disclosure.

The inventors have discovered that the all-terrain vehicle 10' has increased stability for carrying heavy loads with its front fork assembly 100 when a predetemined ratio is maintained between the total boom length (Lb) and the length (Ls) of the superstructure 50'. According to one exemplary embodiment, the predetermined ratio between the total boom length (Lb) and the length (Ls) of the superstructure is as follows:
$Lb : Ls = about 3.92 : 1.00$

Magnitudes smaller and a larger than this predetermined ratio are possible and are included within the scope of this disclosure. For example, the magnitude for the total boom length (Lb) variable in the above listed ratio may range between about 3.00 as a low end point and 4.50 as a high end point for an exemplary range (i.e. 3.00:1.00 or 4.5:1.00 or 4.00:1.00 as three other possible ratios within this exemplary range). However, magnitudes smaller and larger than these two end points for the variable Lb are possible and are included within the scope of this disclosure. According to an exemplary embodiment, the ratio may comprise a magnitude that falls between (and includes) the two end points noted above: that is, between about 3.00:1.00 to 4.50:1:00.

Meanwhile, according to the exemplary embodiment illustrated in FIG. 40, the first and largest boom section 75 may have a length L1 of about, or substantially 16.28 feet. When the second boom section 80 is fully extended relative to the first boom section 75, then these two boom sections 75, 80 may have a length L2 of about, or substantially 27.52 feet.

Similarly, when the third boom section 81 is fully extended relative to the second boom section 80 and first boom section 75, then these three boom sections 75, 80, 81 may have a length L3 of about, or substantially 38.88 feet. And when the fourth boom section 90 is fully extended relative to the third boom section 81, the second boom section 80, and the first boom section 75, then these four boom sections 75, 80, 81, 90 and including a mid-point 4005 of the front fork assembly 100 may have a length L4 of about, or substantially 59.20 feet.

However, other lengths for each boom section 75, 80, 81, and 90 are possible and are included within the scope of this disclosure. Each boom section may be adjusted/sized depending upon an application of the vehicle 10' while maintaining the ratio between the total boom length (Lb) and the superstructure length (Ls) described above.

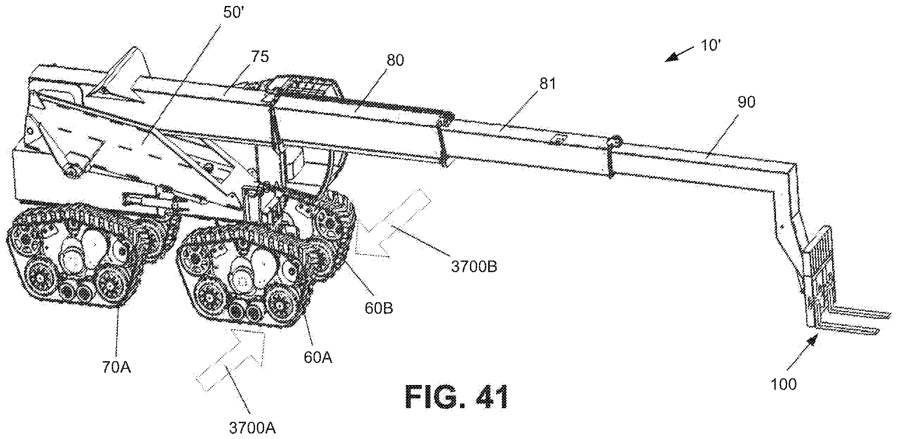

Referring now to FIG. 41, this figure illustrates a side, perspective view of the all-terrain vehicle 10' of FIG. 40 in which all four boom sections 75, 80, 81, and 90 are in a fully extended position while the front telescoping tracks 60A, 60B are in a contracted position. Specifically, in this side, perspective view of FIG. 41, the front telescoping tracks 60A, 60B are shown to be in their fully contracted position as indicated by directional arrows 3700A, 3700B.

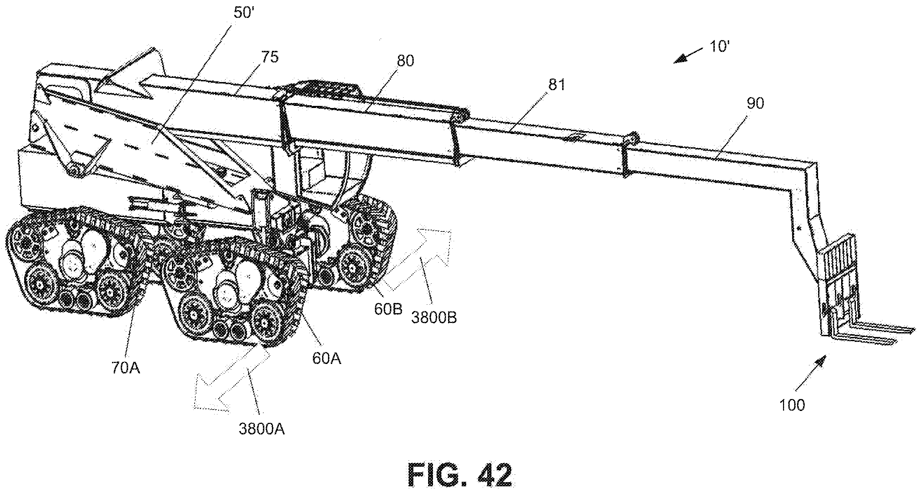

That is, the telescoping axles 163', 167' (not visible in FIG. 41, but see FIG. 37) are fully contracted within the bracket 150 (see FIG. 37). As described above, to add further stability to the all-terrain vehicle 10' when the boom sections 75, 80, 81 and 90 are lifting heavy loads, the telescoping front tracks 60A, 60B may be extended outwardly and away from the front superstructure 50' as illustrated in FIG. 42.

Referring now to FIG. 42, this figure illustrates a side, perspective view of the all-terrain vehicle 10' of FIG. 40 in which all four boom sections 75, 80, 81, and 90 are in a fully extended position while the front telescoping tracks 60A, 60B are also in a fully extended position. Specifically, in this side, perspective view of FIG. 42, the front telescoping tracks 60A, 60B are shown to be in their fully extended position as indicated by directional arrows 3800A, 3800B.

That is, the telescoping axles 163', 167' (not visible in FIG. 42, but see FIG. 38) are fully extended relative to the bracket 150 (see FIG. 38). With the front tracks 60A, 60B fully extended relative to the bracket 150 and the superstructure 50', stability is added to the system such that the boom sections 75, 80, 81, and 90 can lift heavy loads with substantially reduced movement of the superstructure 50' as loads are elevated and lowered with the boom sections 75, 80, 81, and 90.

In this side perspective view of FIG. 42, the front fork assembly 100 is shown in a lowered position such that loads may be lifted from the ground/earth as needed. The front fork assembly 100 shown in FIG. 42 is not at its lowest position since there is space between the largest boom section 75 and the support superstructure 50' as understood by one of ordinary skill in the art.

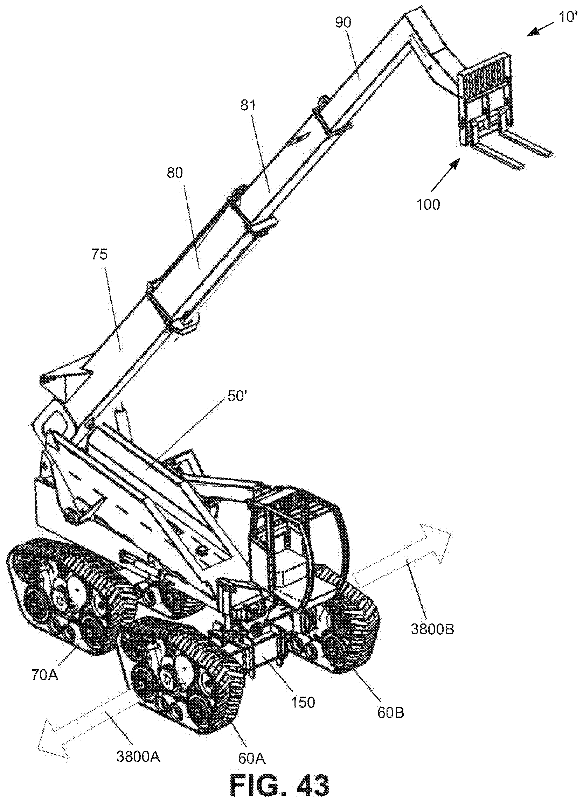

Referring now to FIG. 43, this figure illustrates a side, perspective view of the all-terrain vehicle 10' of FIG. 40 in which all four boom sections 75, 80, 81, and 90 are in a fully extended position while the front telescoping tracks 60A, 60B are also in a fully extended position and while the fork assembly 100 is in an elevated position relative to FIG. 42. As noted previously, with the front telescoping tracks 60A, 60B in their fully extended positions as shown by directional arrows 3800A, 3800B the all-terrain vehicle 10' has increased stability when lifting loads with the front fork assembly 100 and elevating the boom sections 75, 80, 81, and 90 well above the superstructure 50'.

Referring now to FIG. 44, this figure illustrates a side perspective view of the superstructure 50' for the all-terrain vehicle 10' illustrated in FIGs 35-57. Relative to the superstructure 50 illustrated in FIG. 2, the superstructure 50' of FIG. 44 has raised sides 56A', 56B' which extend much higher compared to the raised sides 56 shown in FIG. 2. Specifically, the raised sides 56A', 56B' of the exemplary embodiment of FIG. 44 typically extend to at least one-half the height or greater than one-half the height of the largest boom section 75 (see FIG. 35).

The superstructure 50' further has angled sides 4510A, 4510B which start much earlier along bottom portion and the length of the superstructure 50' compared to the angled sides of the superstructure 50 shown in FIG. 2. The angled sides 4510A, 4510B of the superstructure 50' may extend at angle A2 of at least 20.0 degrees or greater relative to a geometrical longitudinal axis 3615 that extends along the length of the superstructure 50'. This angle A2 is dependent on the height of the raised sides 56A', 56B' and the point along the length of the superstructure 50' at which the angled sides 4510A, 4510B meet the angled sides 56A', 56B. According to an exemplary embodiment, the angle A2 may comprise a magnitude of 34.4 degrees. However, other magnitudes larger or small are possible and are included within the scope of this disclosure.

Also illustrated in FIG. 44 is the front superstructure hinge bracket 190. This hinge bracket 190 of the superstructure 50' engages the hinge bracket 200 of the engine compartment/rear body 40 (see FIGs. 5-6). The hinge brackets 155A, 155B which provide for osciallating movement for the telescoping tracks 60A, 60B (not visible in FIG. 44, but see FIG. 39) are also visible in this FIG. 44.

Referring now to FIG. 45, this figure illustrates a front view of the superstructure 50' shown in FIG. 44. Compared to the superstructure 50 of FIG. 2, the angled sides 4510A, 4510B and raised sides 56A', 56B' have a greater thickness. This increased thickness may add to the stability of the all-terrain vehicle 10' as understood by one of ordinary skill in the art. That is, the increased thickness impacts the moment of intertia of the superstructure 50'.

Referring now to FIG. 46, this figure illustrates a bottom view of the superstructure 50' illustrated in FIG. 44. In this view, bottom portions of the hinge brackets 155A, 155B and 190 are further visible.

### ZERO-TURN VEHICLE WITH ARTICULATION POINT

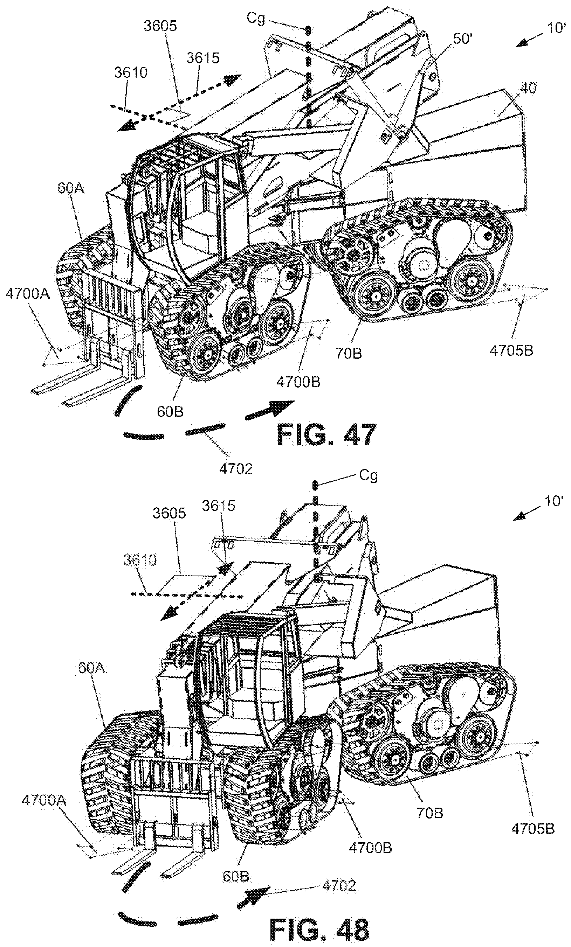

Referring now to FIG. 47, this figure illustrates the all-terrain vehicle 10' of FIG. 35 moving forward, and fully articulated about its articulation point 210 [see FIG. 36] and then starting to initiate a zero-turn in a counter-clockwise direction relative to drawing sheet as shown by counter-clockwise directional arrow 4702. As understood by one of ordinary skill in the art, the term "zero turn" refers to the turning radius of the vehicle 10' being zero inches, or a "zero-degree turn radius" at the center of gravity for the vehicle 10'.

This means the vehicle 10', using its front and rear tracks 60A, 70A, can turn within its own footprint as understood by one of ordinary skill in the art. This allows the vehicle 10' to pivot around an approximate geometric center (Cg) relative to the tracks 60, 70 that is shown on the vehicle 10' in FIG. 47. It is noted that all four tracks 60A, 60B, 70A, 70B are usually rotating at different speeds relative to each other when completing this zero turn.

Specifically, to start a counter-clockwise turn as shown by directional arrow 4702, an operator directs the left front track 60B (relative to the operator) to start turning/moving in a counter-clockwise rotation (when facing outside of the track 60B) as shown by directional arrow 4700B relative to its driving shaft axis 3610. Similarly, the operator directs the left rear track 70B (relative to the operator) to start turning/moving in a counter-clockwise rotation (when facing outside of the track 70B) as shown by directional arrow 4705B relative to its driving shaft axis.

Simultaneously, the operator directs both the right front track 60A and right rear track 70A (not visible) to start turning/moving in a counter-clockwise rotation (when facing outside of the two tracks 60A, 70A) as shown by directional arrow 4700B for track 60A relative to its driving shaft axis 3610.

As noted previously in FIG. 36 and now again in FIG. 47, the longitudinal drive axis 3610 of the front tracks 60A, 70A is maintained at a ninety degree angle 3605 relative to the longitudinal axis 3615 of the superstructure 50'. This ninety degree angle 3605 remains fixed throughout the zero turn.

Referring now to FIG. 48, this figure illustrates the all-terrain vehicle of FIG. 47 continuing the zero-turn in a counter-clockwise direction 4702 relative to drawing sheet. The directional arrows 4700A, 4700B, and 4705B indicate that the tracks 60A, 60B, 70B continue to turn in their counter clock-wise manner.

While not visible in FIG. 48, the right rear track 70B also continues to rotate in the counter clock-wise manner. This movement of the tracks 60A, 60B, 70A, 70B allows the vehicle 10' to continue to pivot around a central axis Cg as shown. In this view, the vehicle 10' has pivoted/rotated about 20.0 degrees relative to a central axis Cg.

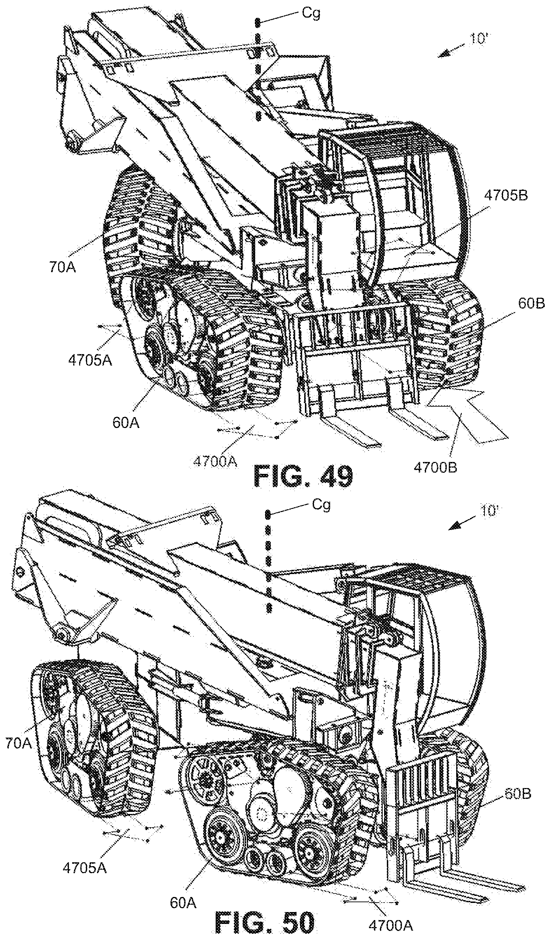

Referring now to FIG. 49, this figure illustrates the all-terrain vehicle of FIG. 48 continuing the zero-turn in a counter-clockwise direction relative to drawing sheet. The directional arrows 4700A, 4705A, and 4705B indicate that the tracks 60A, 60B, 70A continue to turn in their counter clock-wise manner.

While not visible in FIG. 49, the left rear track 70B also continues to rotate in the counter clock-wise manner. As noted previously, this movement of the tracks 60A, 60B, 70A, 70B allows the vehicle 10' to continue to pivot around a central axis Cg as shown. In this view, the vehicle 10' has pivoted/rotated about 90.0 degrees relative to a central axis Cg.

Referring now to FIG. 50, this figure illustrates the all-terrain vehicle of FIG. 49 continuing the zero-turn in a counter-clockwise direction relative to drawing sheet. The directional arrows 4700A and 4705A indicate that the tracks 60A, 70A continue to turn in their counter clock-wise manner.

While not visible in FIG. 50, the left front and left rear tracks 60B, 70B also continue to rotate in the counter clock-wise manner. As noted previously, this movement of the tracks 60A, 60B, 70A, 70B allows the vehicle 10' to continue to pivot around a central axis Cg as shown. In this view, the vehicle 10' has pivoted/rotated about 100.0 degrees relative to a central axis Cg.

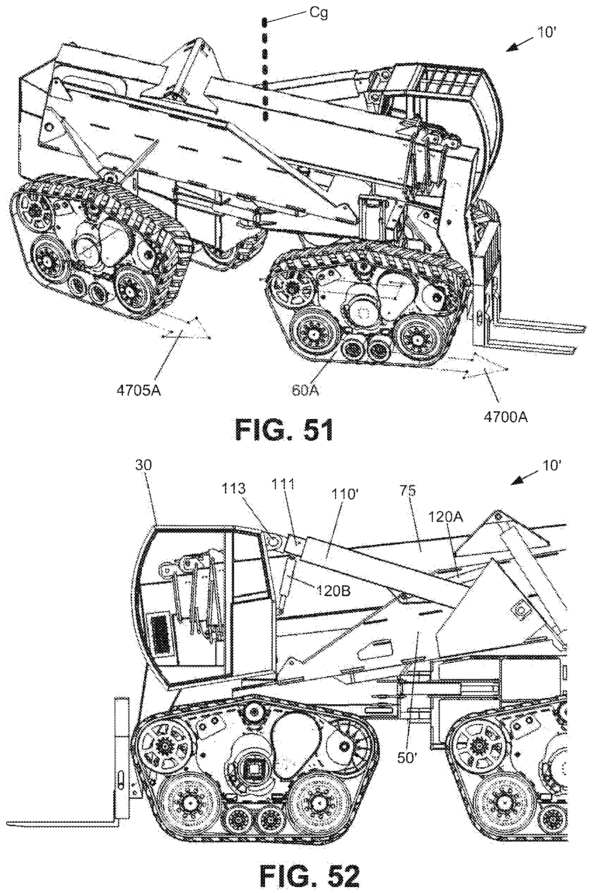

Referring now to FIG. 51, this figure illustrates the all-terrain vehicle of FIG. 50 continuing the zero-turn in a counter-clockwise direction relative to drawing sheet. The directional arrows 4700A and 4705A indicate that the tracks 60A, 70A continue to turn in their counter clock-wise manner.

While not visible in FIG. 51, the left front and left rear tracks 60B, 70B also continue to rotate in the counter clock-wise manner. As noted previously, this movement of the tracks 60A, 60B, 70A, 70B allows the vehicle 10' to continue to pivot around a central axis Cg as shown. In this view, the vehicle 10' has pivoted/rotated about 180.0 degrees relative to its center axis Ca. At the 180.0 degree position, the vehicle 10' has completed its "zero-turn" as understood by one of ordinary skill in the art.

### IMPROVED CAB OPERATOR LOADING SEQUENCE

Referring now to FIG. 52, this figure illustrates a side view of the all-terrain vehicle 10' with its cab 30 initiating an operator loading sequence. In this view, a first cab boom section 110' is visible. As noted previously, compared to the embodiment of FIG. 2, the cab linkage 110 has been replaced with the first cab boom section 110'. The first cab boom section 110' houses a second, smaller boom section 111 which may telescope/extend from the first cab boom section 110'.

The second boom section 111 may be coupled to the cab 30 by a hinge pin 113. The second boom section 111 may be coupled to the cab 30 by a second hydraulic cylinder 120B which may pivot the cab 30 about the hinge pin 113. The first hydraulic cylinder 120A is coupled and helps move the first boom section 110'. It is noted that the first boom section 110' may be coupled to and driven by two hydraulic cylinders 120A though only one is visible in FIG. 52.

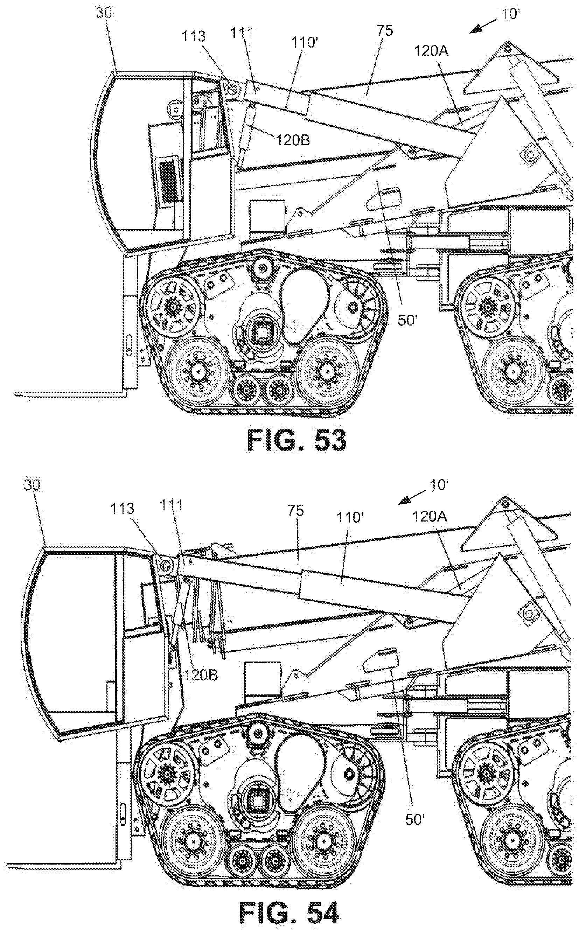

In FIG. 52, the first boom section 110' has started to move in a downward direction relative to the superstructure 50'. As will be apparent from the later FIGs. 53-58, the cab 30 and its support system comprises an significant advancement over the prior art because cab 30 may be lowered such that it contacts or almost contacts the ground/earth. Such a function/feature is significantly advantageous for operators/workers who may be handicapped, such as an operator who may be a paraplegic, and must be transferred from a wheel-chair into the cab 30.

Referring now to FIG. 53, this figure illustrates a side view of the all-terrain vehicle 10' with its cab 30 continuing with an operator loading sequence relative to FIG. 52. In this FIG. 53, the second cab boom section 111 has been telescoped/extended from the first cab boom section 110'. This movement has moved the cab 30 past the first load boom 75.

Referring now to FIG. 54, this figure illustrates a side view of the all-terrain vehicle 10' with its cab 30 continuing with an operator loading sequence relative to FIG. 53. In this FIG. 54, the second cab boom section 111 has been further telescoped/extended from the first cab boom section 110', while the first hydraulic cylinder 120A has lowered the first cab boom section 110'. This movement has moved the cab 30 further past the first load boom 75.

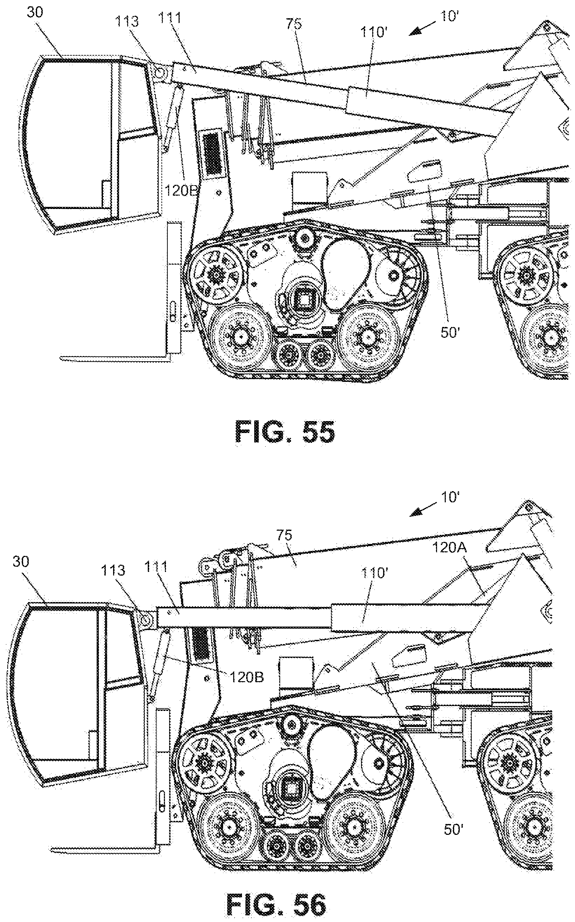

Referring now to FIG. 55, this figure illustrates a side view of the all-terrain vehicle 10' with its cab 30 continuing with an operator loading sequence relative to FIG. 54. In this FIG. 55, the second cab boom section 111 has been further telescoped/extended from the first cab boom section 110', while the first hydraulic cylinder 120A has continued to lower the first cab boom section 110'. This movement has moved the cab 30 further past the first load boom 75.

Referring now to FIG. 56, this figure illustrates a side view of the all-terrain vehicle 10' with its cab 30 continuing with an operator loading sequence relative to FIG. 55. In this FIG. 56, the first hydraulic cylinder 120A has continued to lower the first cab boom section 110' relative to the superstructure 50'. During this downward movement, the second hydraulic cylinder 120B may pivot the cab 30 around pivot pin 113 such that the cab 30 stays relatively level. This movement has moved the cab 30 below the first load boom 75.

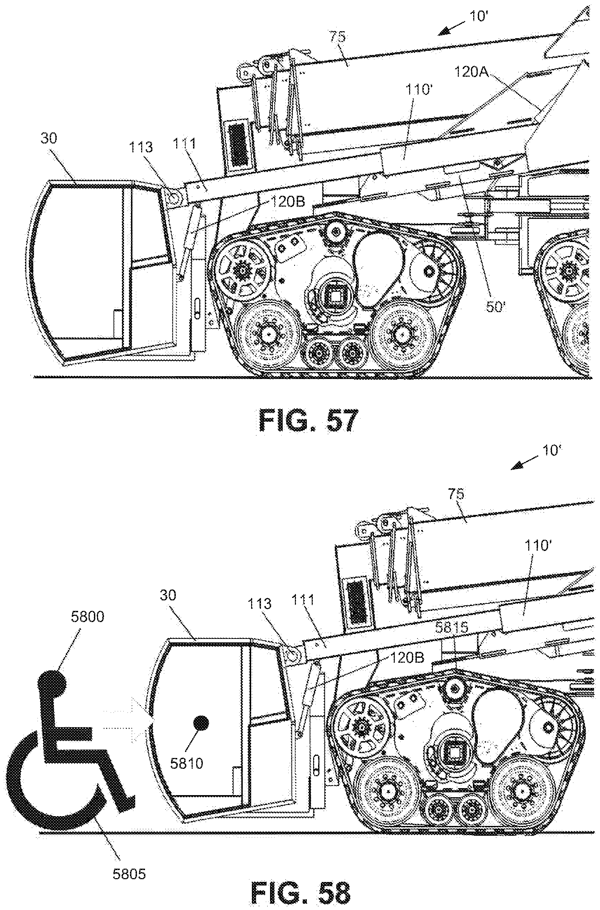

Referring now to FIG. 57, this figure illustrates a side view of the all-terrain vehicle 10' with its cab 30 continuing with an operator loading sequence relative to FIG. 56. In this FIG. 57, the first hydraulic cylinder 120A has lowered the first cab boom section 110' to its maximum extent relative to the superstructure 50'. Prior to this maximum downward position, the second hydraulic cylinder 120B may continue to pivot the cab 30 around pivot pin 113 such that the cab 30 stays relatively level. This movement has moved the cab 30 below the first load boom 75 and almost contacting the ground/earth.

Referring now to FIG. 58, this figure illustrates a side view of the all-terrain vehicle 10' with its cab 30 continuing with an operator loading sequence relative to FIG. 57. In this figure, an operator 5800 who may be a paraplegic and has a wheel-chair 5805, may get access to the cab 30 so that the operator may easily transfer him/her-self from the chair 5805 to the cab 30 as understood by one of ordinary skill in the art.

The cab 30 may be adjustable between a first position and a second postion. The first position may include a location where a geometrical mid-point 5810 of the cab is below a top section 5815 of one of the front tracks 60B. The first position may further include a location which is in front of one of the front tracks 60B.

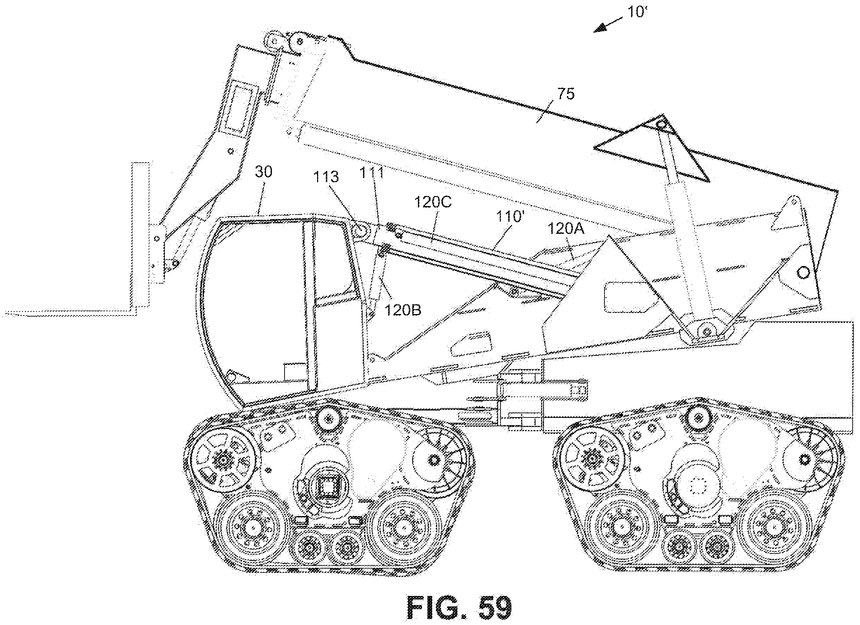

Referring now to FIG. 59, this figure illustrates a side view of the all-terrain vehicle 10' with its cab 30 in an elevated position and while the cab boom 110' is in a contracted position relative to the boom 110'. In this view of FIG. 59, a third hydraulic cylinder 120C is now visible. This third hydraulic cylinder 120C may provide the force needed to extend the boom section 111 away from the cab boom 110'. In FIG. 59, the third hydraulic cylinder 120C is shown in a fully contracted position.

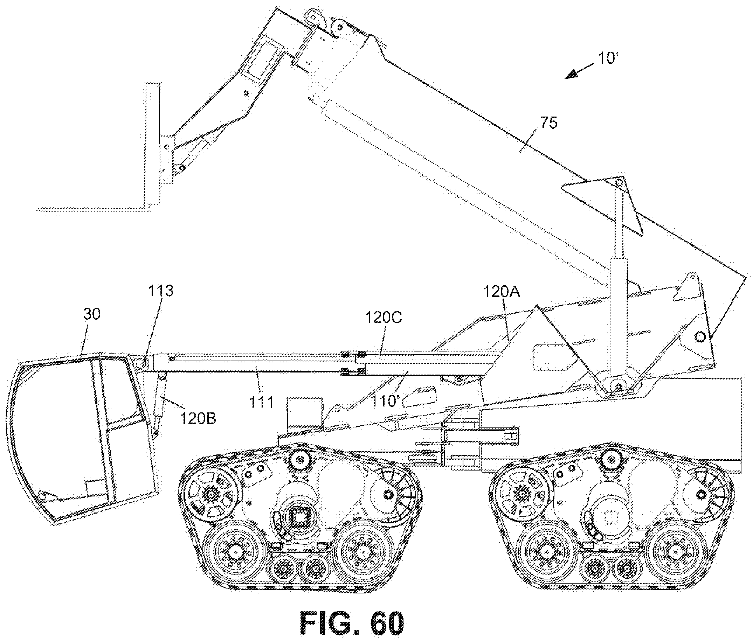

Referring now to FIG. 60, this figure illustrates a side view of the all-terrain vehicle 10' with its cab 30 in an elevated position and while the cab boom 110' is in an extended position. In this view of FIG. 60, the third hydraulic cylinder 120C is also visible. This third hydraulic cylinder 120C may provide the force needed to extend the boom section 111 away from the cab boom 110'. In FIG. 60, the third hydraulic cylinder 120C is shown in a fully extended position.

Certain steps in the processes described in this specification naturally precede others for the invention to function as described. However, the invention is not limited to the order of the steps described if such order or sequence does not alter the functionality of the invention. That is, it is recognized that some steps may be performed before, after, or parallel (substantially simultaneously with) other steps without departing from the scope and spirit of the invention. In some instances, certain steps may be omitted or not performed without departing from the invention. Further, words such as "thereafter", "then", "next", etc. are not intended to limit the order of the steps. These words are simply used to guide the reader through the description of the exemplary method.

Although a few embodiments have been described in detail above, those skilled in the art will readily appreciate that many modifications are possible in the embodiments without materially departing from this disclosure. Accordingly, such modifications are intended to be included within the scope of this disclosure as defined in the following claims. In the claims, means-plus-function clauses are intended to cover the structures described herein as performing the recited function and not only structural equivalents, but also equivalent structures.

Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, sixth paragraph for any limitations of any of the claims herein, except for those in which the claim expressly uses the words 'means for' together with an associated function.

Therefore, although selected aspects have been illustrated and described in detail, it will be understood that various substitutions and alterations may be made therein without departing from the spirit and scope of the present invention, as defined by the following claims.

## Claims

1. An all-terrain telehandler (10) comprising:
a pair of front tracks, each front track being coupled to a front bracket (150) by an arm that telescopes relative to the front bracket (150), wherein the front bracket (150) is coupled to an under surface of a front body; and
a front body superstructure (50') coupled to an upper surface of the front body, the front body superstructure (50') supporting a telescoping boom (20), the front body superstructure (50') defining a first axis while the front bracket (150) defines a second axis, the first axis being maintained at a fixed, predetermined angle relative to the second axis such that the telescoping boom (20) is operable to extend to a ground level when nested in the front body superstructure (50'),
a pair of rear tracks coupled to a rear body (40), the rear body (40) coupled to the front body superstructure (50') by an articulation point (210), the articulation point (210) facilitating steering of the all-terrain telehandler (10);
wherein the rear body (40) is operable to articulate relative to the articulation point (210) without affecting a position of the front body superstructure (50') relative to the front body,
wherein the telescoping boom (20) is a first telescoping boom, and wherein the all-terrain telehandler (10) is **characterized by** :a second telescoping boom, and a cab (30) coupled to the second telescoping boom.

2. The all-terrain telehandler (10) of claim 1, wherein the predetermined angle comprises a magnitude of about ninety degrees.

3. The all-terrain telehandler (10) of claim 1, wherein a first length is defined by a maximum extension position for the telescoping boom (20); and a second length being defined by a front axle connection point to a hinge point on the superstructure for the telescoping boom (20), wherein a ratio of the first length to the second length is less than or equal to approximately 4.00:1.00, whereby the all-terrain telehandler (10) is substantially stable when moving loads supported by the telescoping boom (20).

4. The all-terrain telehandler (10) of claim 1, wherein a first length is defined by a maximum extension position for the telescoping boom (20); and a second length being defined by a front axle connection point to a hinge point on the superstructure for the telescoping boom (20), wherein a ratio of the first length to the second length is less than or equal to approximately 4.50:1.00, whereby the all-terrain telehandler (10) is substantially stable when moving loads supported by the telescoping boom (20).

5. The all-terrain telehandler (10) of claim 1, wherein the telescoping boom (20) comprises at least two sections.

6. The all-terrain telehandler (10) of claim 5, wherein the telescoping boom (20) comprises at least three sections.

7. The all-terrain telehandler (10) of claim 1, wherein the front tracks and rear tracks when moving in predetermined directions allow the all-terrain telehandler (10) to complete a zero-turn.

8. The all-terrain telehandler (10) of claim 1, wherein the cab is adjustable between a first position and a second position, the first position comprising a location where a geometrical mid-point of the cab is below a top section of one of the front tracks.

9. The all-terrain telehandler (10) of claim 8, wherein the first position further comprises a location which is in front of one of the front tracks.

## Patentansprüche

1. Geländegängiger Teleskoplader (10), der Folgendes umfasst:
ein Paar vordere Laufketten, wobei jede vordere Laufkette über einen Arm, der in Bezug auf eine vordere Halterung (150) teleskopierbar ist, mit der vorderen Halterung (150) gekoppelt ist, wobei die vordere Halterung (150) mit einer Unterseite eines vorderen Hauptteils gekoppelt ist, und
einen Aufbau (50') des vorderen Hauptteils, der mit einer Oberseite des vorderen Hauptteils gekoppelt ist, wobei der Aufbau (50') des vorderen Hauptteils einen Teleskopausleger (20) trägt, wobei der Aufbau (50') des vorderen Hauptteils eine erste Achse definiert, während die vordere Halterung (150) eine zweite Achse definiert, wobei die erste Achse in einem festen vorgegebenen Winkel zur zweiten Achse gehalten wird, so dass sich der Teleskopausleger (20) so betreiben lässt, dass er bis auf Bodenebene ausgefahren werden kann, wenn er in den Aufbau (50') des vorderen Hauptteils eingebettet ist,
ein Paar hintere Laufketten, die mit einem hinteren Hauptteil (40) gekoppelt sind, wobei der hintere Hauptteil (40) über ein Knickgelenk (210) mit dem Aufbau (50') des vorderen Hauptteils gekoppelt ist, wobei das Knickgelenk (210) ein Steuern des geländegängigen Teleskopladers (10) ermöglicht,
wobei sich der hintere Hauptteil (40) so betreiben lässt, dass er in Bezug auf das Knickgelenk (210) frei beweglich ist, ohne dass sich dies auf eine Position des Aufbaus (50') des vorderen Hauptteils in Bezug auf den vorderen Hauptteil auswirkt,
wobei es sich bei dem Teleskopausleger (20) um einen ersten Teleskopausleger handelt und
der geländegängige Teleskoplader (10) durch Folgendes gekennzeichnet ist:
einen zweiten Teleskopausleger und eine mit dem zweiten Teleskopausleger gekoppelte Fahrerkabine (30).

2. Geländegängiger Teleskoplader (10) nach Anspruch 1, wobei der vorgegebene Winkel eine Größe von etwa neunzig Grad umfasst.

3. Geländegängiger Teleskoplader (10) nach Anspruch 1, wobei eine erste Länge durch eine maximale Ausfahrposition für den Teleskopausleger (20) und eine zweite Länge durch einen Vorderachsverbindungspunkt zu einem Gelenkpunkt an dem Aufbau für den Teleskopausleger (20) definiert ist, wobei ein Verhältnis der ersten zur zweiten Länge maximal etwa 4,00:1,00 entspricht, wodurch der geländegängige Teleskoplader (10) im Wesentlichen stabil ist, wenn er von dem Teleskopauslader (20) getragene Lasten bewegt.

4. Geländegängiger Teleskoplader (10) nach Anspruch 1, wobei eine erste Länge durch eine maximale Ausfahrposition für den Teleskopausleger (20) und eine zweite Länge durch einen Vorderachsverbindungspunkt zu einem Gelenkpunkt an dem Aufbau für den Teleskopausleger (20) definiert ist, wobei ein Verhältnis der ersten zur zweiten Länge maximal etwa 4,50:1,00 entspricht, wodurch der geländegängige Teleskoplader (10) im Wesentlichen stabil ist, wenn er von dem Teleskopauslader (20) getragene Lasten bewegt.

5. Geländegängiger Teleskoplader (10) nach Anspruch 1, wobei der Teleskopausleger (20) mindestens zwei Abschnitte umfasst.

6. Geländegängiger Teleskoplader (10) nach Anspruch 5, wobei der Teleskopausleger (20) mindestens drei Abschnitte umfasst.

7. Geländegängiger Teleskoplader (10) nach Anspruch 1, wobei es die vorderen und die hinteren Laufketten, wenn sie sich in vorgegebene Richtungen bewegen, dem geländegängigen Teleskoplader (10) ermöglichen, auf der Stelle zu wenden.

8. Geländegängiger Teleskoplader (10) nach Anspruch 1, wobei die Fahrerkabine zwischen einer ersten und einer zweiten Position verstellbar ist, wobei die erste Position eine Lage umfasst, bei der sich ein geometrischer Mittelpunkt der Fahrerkabine unterhalb eines oberen Abschnitts einer der vorderen Laufketten befindet.

9. Geländegängiger Teleskoplader (10) nach Anspruch 8, wobei die erste Position ferner eine Lage umfasst, die sich vor einer der vorderen Laufketten befindet.

## Revendications

1. Chargeur télescopique tout-terrain (10) comportant :
une paire de chenilles avant, chaque chenille avant étant accouplée à un support avant (150) par un bras qui se déploie de manière télescopique par rapport au support avant (150), dans lequel le support avant (150) est accouplé à une surface inférieure d'un corps avant ; et
une superstructure de corps avant (50') accouplée à une surface supérieure du corps avant, la superstructure de corps avant (50') supportant une flèche télescopique (20), la superstructure de corps avant (50') définissant un premier axe tandis que le support avant (150) définit un deuxième axe, le premier axe étant maintenu à un angle fixe prédéterminé par rapport au deuxième axe de telle sorte que la flèche télescopique (20) est en mesure de s'étendre au niveau du sol quand elle est imbriquée dans la superstructure de corps avant (50') ;
une paire de chenilles arrière accouplées à un corps arrière (40), le corps arrière (40) étant accouplé à la superstructure de corps avant (50') par un point d'articulation (210), le point d'articulation (210) facilitant la direction du chargeur télescopique tout-terrain (10) ;
dans lequel le corps arrière (40) est en mesure d'être actionné pour s'articuler par rapport au point d'articulation (210) sans affecter une position de la superstructure de corps avant (50') par rapport au corps avant,
dans lequel la flèche télescopique (20) est une première flèche télescopique, et dans lequel le chargeur télescopique tout-terrain (10) est **caractérisé par** :
une deuxième flèche télescopique et une cabine (30) accouplée à la deuxième flèche télescopique.

2. Chargeur télescopique tout-terrain (10) selon la revendication 1, dans lequel l'angle prédéterminé comporte une amplitude d'environ quatre-vingt-dix degrés.

3. Chargeur télescopique tout-terrain (10) selon la revendication 1, dans lequel une première longueur est définie par une position d'extension maximale pour la flèche télescopique (20) ; et une deuxième longueur étant définie par un point de connexion de l'essieu avant à un point d'articulation sur la superstructure pour la flèche télescopique (20), dans lequel un rapport entre la première longueur et la deuxième longueur est inférieur ou égal à environ 4,00:1,00, ce par quoi le chargeur télescopique tout-terrain (10) est sensiblement stable lors du déplacement de charges supportées par la flèche télescopique (20).

4. Chargeur télescopique tout-terrain (10) selon la revendication 1, dans lequel une première longueur est définie par une position d'extension maximale pour la flèche télescopique (20) ; et une deuxième longueur étant définie par un point de connexion de l'essieu avant à un point d'articulation sur la superstructure pour la flèche télescopique (20), dans lequel un rapport entre la première longueur et la deuxième longueur est inférieur ou égal à environ 4,50:1,00, ce par quoi le chargeur télescopique tout-terrain (10) est sensiblement stable lors du déplacement de charges supportées par la flèche télescopique (20).

5. Chargeur télescopique tout-terrain (10) selon la revendication 1, dans lequel la flèche télescopique (20) comporte au moins deux sections.

6. Chargeur télescopique tout-terrain (10) selon la revendication 5, dans lequel la flèche télescopique (20) comporte au moins trois sections.

7. Chargeur télescopique tout-terrain (10) selon la revendication 1, dans lequel les chenilles avant et les chenilles arrière lors du déplacement dans des directions prédéterminées permettent au chargeur télescopique tout-terrain (10) d'effectuer un rayon de braquage de zéro.

8. Chargeur télescopique tout-terrain (10) selon la revendication 1, dans lequel la cabine est réglable entre une première position et une deuxième position, la première position comportant un emplacement dans lequel un point médian géométrique de la cabine se trouve au-dessous d'une section supérieure de l'une des chenilles avant.

9. Chargeur télescopique tout-terrain (10) selon la revendication 8, dans lequel la première position comporte par ailleurs un emplacement qui se trouve en face de l'une des chenilles avant.
